# EUROPEAN PATENT APPLICATION

(11) **EP 2 067 825 A2**
(43) Date of publication of application: **10.06.2009**
(21) Application number: 08021113.9
(22) Date of filing: 04.12.2008
(51) Int. Cl.: C09B 67/08, C09B 67/00, C09C 1/00

(54) **Reinforced glitter**

(30) Priority: 05.12.2007 US 992507 P
(71) Applicant: JDS Uniphase Corporation, Milpitas, CA 95035 (US)
(72) Inventor: Argoitia, Alberto, Santa Rosa, CA 95405 (US); Lamar, Scott, Santa Rosa, CA 95404 (US); Kittler, Wilfred, C., Jr, Rohnert Park, CA 94928 (US)
(74) Representative: Adam, Holger

(57) **Abstract**

The invention relates to reinforced opaque glitter particles having substantially uniform shape and size. Each of the particles consists of a reflective core supported by a transparent organic substrate and one or more robustness-improving layers for providing rigidity to the particle. Optionally, the particles have lacquer layers at a surface of the particle. One example of a robustness-improving layer is an inorganic transparent protective layer having a thickness of at least 20 nm adjacent directly to the aluminum layer. Another example is an adhesion promoting layer directly adjacent to the transparent organic substrate.

## Description

### TECHNICAL FIELD

The present invention relates to opaque glitter particles and in particular to a glitter having metallic appearance.

### BACKGROUND OF THE INVENTION

Glitter is nearly ubiquitous throughout the world and is used to decorate packaging, clothing, the human body, sporting goods, and many other articles. Glitter, which is a plurality of particles having a regular or irregular periphery, is known in forms that include light reflecting or light refracting material. For example, glitter is described in U.S. Pat. Nos. RE 31,780 (Cooper et al.), U.S. Pat. No. 3,764,067 (Coffey et al.), U.S. Pat. No. 4,310,584 (Cooper et al.), and U.S. Pat. Appl. No. 20060228553 (Argoitia et al.); the patents and application are incorporated herein by reference.

Glitter may be clear or may be provided in a variety of colors such as silver, gold, blue, red, etc., or mixtures thereof; and may be provided in a variety of shapes such as circles, squares, rectangles, triangles, diamonds, stars, symbols, alphanumerics (i.e., letters and/or numbers), or mixtures of different shapes.

What is most noticeable about articles coated with glitter is that they tend to glitter or sparkle even when the light source, the coated article and the observer are stationary. Relative movement between the light source, coated article and observer is not required to perceive the glittery appearance of coated articles. Glitter particles each have a large surface area available for reflection, and the glittery effect comes from the misalignment of these particles. However, when relative movement is present, a glitter-coated article tends to sparkle in a dynamic manner wherein the location from where the sparkling effect is viewed, appears to constantly change with movement. Glitter is most noticeable when the glitter particles are opaque; hence, glitter is preferably formed of an opaque reflective material. Non-opaque glitter particles tend to be faint and washed-out in appearance.

Glitter is commercially available in a variety of colors, shapes and sizes. Since the human eye can barely perceive any glittery effect from reflective particles less than 20 microns in diameter, true glitter particles tend to be larger than 50 microns in diameter. For a pleasing visual effect, it is also preferable for glitter particles to be substantially uniform in shape and size. Having some particles that are too large and significantly larger than other adjacent particles lessens the effect that glitter provides, as the eye tends to focus momentarily on the larger particles distracting the viewer. In contrast, if particles are too small, they simply take up valuable space without providing any perceivable glittery effect.

In order for paints and inks to appear truly "glittery," the particles have to be of a diameter similar to conventional glitter; that is, greater than about 30 microns and preferably more than 50 microns and up to or greater than 2000 microns.

Although the large particles are desirous for use as glitter, such particles tend to curl, losing their ability to serve as high quality glitter which needs to be relatively flat.

In summary, it is preferred to have glitter particles which are substantially flat, uniform in size and shape, and opaque. It is also desirous to have glitter particles which are at least 30 microns in size, and which have high reflectivity.

In the last few years, the demand for highly reflective glitter having metallic appearance grew rapidly, especially for the glitter made of aluminized foil, which has a neutral silver color and creates a sparkling "brilliant" effect due to the high reflectivity of aluminum. Advantageously, this glitter is cost effective and convenient to use in a medium of any color.

Conventionally, the reflective glitter is made of a foil formed by a polymeric film coated with aluminum. The metalized coating is typically vacuum deposited; and the foil is optionally coated with clear lacquer which may be tinted with a dye.

However, in painting applications, the conventional glitter produces a so-called "salt-and-pepper effect," that is appearance of black specks or smears on the surface of a paint coat. To avoid the salt-and-pepper effect, a layer of glitter-loaded paint is further coated with additional layers of a clear coating material. In some instances, very thick clear layers are necessary to avoid black specs and achieve a smooth glittering surface.

It is likely that the salt-and-pepper effect is caused by curling of glitter particles or mechanical damage to the particles resulting in separation of the aluminum layer from the organic film, or a combination thereof

Accordingly, it is desirable to provide metallically-colored reflective glitter with improved robustness, which is more stable to mechanical and chemical impact than the conventional glitter, in order to eliminate or decrease the salt-and-pepper effect in paint coatings including the novel glitter.

### SUMMARY OF THE INVENTION

Accordingly, the present invention relates to reinforced opaque glitter comprising uniformly shaped and sized particles. Each of the particles consists of: a transparent organic substrate; a reflective core supported by the transparent organic substrate, one or more robustness-improving layers supported by the transparent organic substrate, for providing rigidity to the particle. Optionally, the particles have lacquer layers at a surface of the particle, on one or both planar sides of the particle.

One aspect of the present invention relates to uniformly shaped and sized glitter particles consisting of: a transparent organic substrate composed of PET; an aluminum layer adjacent directly to the transparent organic substrate; a robustness-improving layer, which is an inorganic transparent protective layer having a thickness of at least 20 nm adjacent directly to the aluminum layer; and, optionally, lacquer layers at the surface of the particle.

Another aspect of the present invention provides uniformly shaped and sized glitter particles consisting of: a transparent organic substrate composed of PET; an aluminum layer; a robustness-improving layer which is an adhesion promoting layer adjacent directly to the transparent organic substrate and the aluminum layer, for promoting adhesion therebetween; and, optionally, lacquer layers at the surface of the particle.

Yet another aspect of the present invention provides glitter particles consisting of: a transparent organic substrate composed of PET; an aluminum layer; a first robustness-improving layer, which is an adhesion promoting layer, adjacent directly to the transparent organic substrate and the aluminum layer, for promoting adhesion therebetween; a second robustness-improving layer, which is an inorganic transparent protective layer having a thickness of at least 20 nm, disposed so that the aluminum layer is located between the first and second robustness-improving layers; and, optionally, lacquer layers at the surface of the particle.

Further, the invention provides uniformly shaped and sized opaque glitter particles, wherein each particle consists of an organic substrate having first and second sides, a first layered structure on the first side of the substrate and a second layered structure on the second side of the substrate. The first and second structures each consists of a reflective core supported by the organic substrate; one or more robustness-improving layers supported by the organic substrate, for providing rigidity to the particle; and, optionally, a lacquer layer at a surface of the particle. The one or more robustness-improving layers include a transparent inorganic protective layer or an adhesion promoting layer, or both.

In accordance with this invention these glitter particles preferably each have a diameter "d" of at least 30 microns, and a thickness "t" of more than 6 microns wherein t<d/2. The organic support layer provides rigidity for preventing the particles from curling and for allowing precise cutting of the glitter substrate into discreet particle size.

### BRIEF DESCRIPTION OF THE DRAWINGS

The invention will be described in greater detail with reference to the accompanying drawings which represent preferred embodiments thereof, wherein:

Figure 1 is a cross-section of a glitter particle having an inorganic protective layer;

Figure 2 is a cross-section of a glitter particle having an adhesion promoting layer;

Figure 3 is a cross-section of a glitter particle having an inorganic protective layer and an adhesion promoting layer;

Figure 4 is a cross-section of a glitter particle having a magnetic layer within a reflective core; and,

Figure 5 is a diagram illustrating a two drum vacuum roll coater.

### DETAILED DESCRIPTION

Due to the glitter particle size, special application techniques had to be developed to produce a defect free, smooth clear coat finish with glitter particles underneath. In many cases this caused a variety of challenges to the painter. The application of glitter-containing coating requires many more hours of extra work, materials, patience and a special talent. The challenge is for the particles to be under the clear coat and make the coating smooth, not damage the glitter particles, and still have good adhesion since the particles are so large. To achieve this, the painter applies a base color coat followed by glitter particles in a paint binder, followed by several clear coat layers. However, sanding as is required between coats results in fracturing or cracking of the glitter particles, making pits in a particle or producing micro shattering similar to a broken windshield. In addition, several clear coats would have to be applied in order to create a film build-up to cover the particle so that it could be sanded without damaging the particle while achieving adhesion between layers. The most challenging and frustrating aspect is that the damage to the glitter particles is not seen until the next layer of clear coat is applied. If the glitter particles are damaged, the micro shattering or pits are filled in by the clear coat causing the defects to be exposed by showing optical differences in depth and smoothness which results in a black or white spot depending on depth or size of damage to the glitter particle. When color shifting glitter having PET/Cr/MgF₂/Al/MgF₂/Cr layers forming particles was made and tested, it was unexpectedly discovered that many of the challenges listed above decreased or were eliminated and, differently from the conventional silver-colored glitter, color shifting glitter causes a lesser salt-and-pepper effect, if any, and a smooth glitter-containing coating is achievable with fewer clear coats and sanding steps.

It is our understanding that the color shifting glitter is more robust than the conventional neutral glitter made from an aluminized foil. In particular, the color shifting glitter has better adhesion between the PET substrate and layers deposited thereon, because adjacent to the PET substrate is the layer of Chromium known for its good adhesion to PET. Further, in the color-shifting glitter particles, both sides of the aluminum layer are better protected from damage, whereas in the conventional glitter one side of the aluminum layer is covered only with a lacquer layer made of a relatively soft organic material. Additionally, relatively thick layers of hard inorganic materials such as MgF₂ provide higher rigidity to the particles.

The discovery has been employed to provide metallically colored glitter having improved mechanical properties.

As described above, particles of the conventional glitter consist of a transparent organic film and a metal layer deposited thereon. Typically, two layers of lacquer, clear or including a colorant, are coated on both sides of the metalized film.

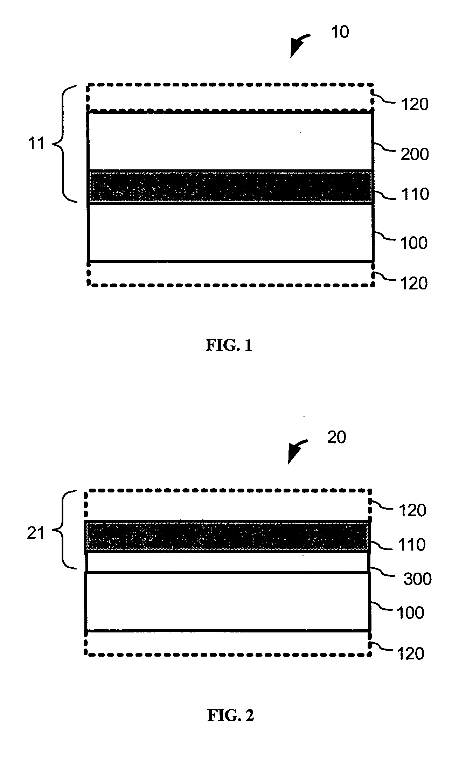

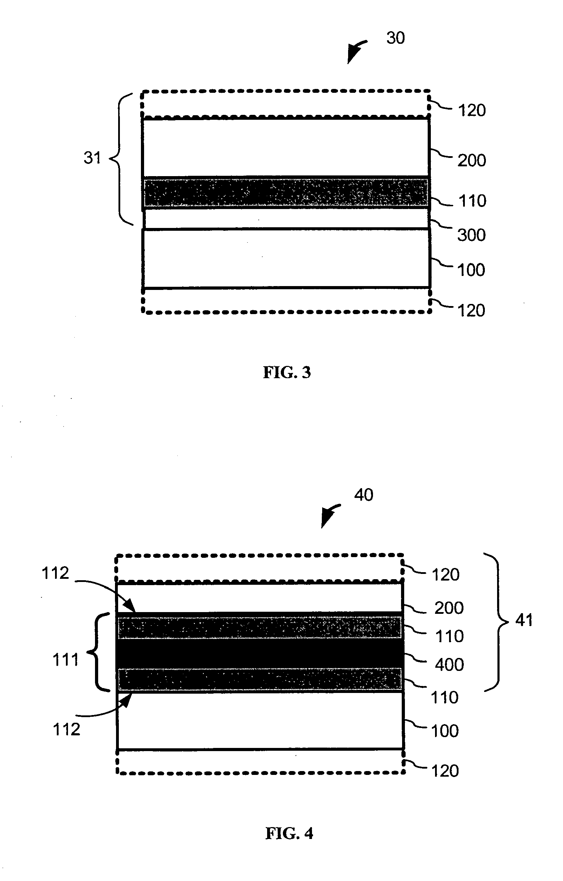

The glitter particles of the instant invention include an organic substrate, preferably transparent, and a reflective core supported by the substrate, wherein a first and a second surface the reflective core have a reflectivity in a part of the visible spectrum of at least 50% and preferably higher than 70%. The reflective core may be a single reflector layer, such as shown in Figs. 1-3, or a reflective core such as shown in Fig. 4. Optionally, the particles include lacquer layers at a surface of the particle, on one or both sides of the particle.

Differently from the conventional glitter particles, the glitter particles of the instant invention include one or more robustness-improving layers supported by the substrate, for providing robustness and rigidity to the particle. The substrate and the robustness-improving layers are transparent, that is having a transparency of at least 70% in a part of the visible spectrum; preferably all the layers on one side of the reflective core have a total transparency of at least 50%. The robustness-improving layers are colorless or may add a hue to the metallic color of the particles.

The high transparency of all the layers other than the reflector core, which preferably is a highly reflective aluminum layer or has aluminum at the surface of the reflective core, provides bright silver-colored glitter.

The glitter of the instant invention is an opaque glitter which has a metallic color, e.g. silver, gold, etc., and is absent of a color-shifting effect, though it may have a hue provided e.g. by a colored lacquer.

In more detail, the glitter particles of the instant invention will be described now with reference to Figs. 1-4.

A glitter particle 10 shown in Fig. 1 includes an organic substrate 100 and a layered structure 11 on the substrate 100. The layered structure 11 includes a reflective layer 110, coated directly onto the substrate 100, and an inorganic protective layer 200, serving as a robustness-improving layer, coated onto the reflective layer 110. Optionally, the particle 10 has one or two lacquer layers 120 coated on the substrate 100 and the inorganic protective layer 200 so as to be disposed at the surface of the particle 10. Accordingly, the reflective layer 110 is disposed between the transparent organic substrate 100 and the inorganic transparent protective layer 200.

By way of example, the substrate 100 is composed of poly(ethylene terephthalate) (PET) and is 1 mil thick. Alternatively, it may be composed of other organic materials such as polymethacrylate and poly(vinylbutyral). The thickness of the substrate 100 may range from 0.5 mil to 5 mil. Preferably, the substrate 100 is transparent, but may be partially transparent with a transparency of at least 85%.

In this example, the reflector layer 110 is an aluminum layer of 50 nm thick and the inorganic protective layer 200 is a 200 nm thick layer of MgF₂. More generally, the reflector layer 110 is a metal layer, preferably having a reflectivity of at least 50 % for at some of the wavelengths in the visible spectrum; more preferably, the reflectivity of the reflector layer is higher than 70%. The reflector layer 110 may contain aluminum, copper, silver, titanium, gold, etc., or alloys thereof. The protective layer 200 is preferably composed of an inorganic brittle glass-like hard material such as SiO₂ and has a thickness of at least 20 nm, preferably 50-400 nm, so as to protect the reflective layer from external damage and to provide rigidity to the particles and prevent them from curling.

Other materials suitable for the protective layer 200 are high index dielectric materials including zinc sulfide (ZnS), zinc oxide (ZnO), zirconium oxide (ZrO₂), titanium dioxide (TiO₂), diamond-like carbon, indium oxide (In₂O₃), indium-tin-oxide (ITO), tantalum pentoxide (Ta₂O₅), cerium oxide (CeO₂), yttrium oxide (Y₂O₃), europium oxide (Eu₂O₃), iron oxides such as (II)diiron(III) oxide (Fe₃O₄) and ferric oxide (Fe₂O₃), hafnium nitride (HfN), hafnium carbide (HfC), hafnium oxide (HfO₂), lanthanum oxide (La₂O₃), magnesium oxide (MgO), neodymium oxide (Nd₂O₃), praseodymium oxide (Pr₆O₁₁), samarium oxide (Sm₂O₃), antimony trioxide (Sb₂O₃), silicon, silicon monoxide (SiO), selenium trioxide (Se₂O₃), tin oxide (SnO₂), tungsten trioxide (WO₃), combinations thereof, and the like. Other suitable high index dielectric materials include mixed oxides such as those described in U.S. Patent No. 5,989,626 to Coombs et al., the disclosure of which is incorporated by reference herein. When the materials of U.S. Patent No. 5,989,626 are used as dielectric layers, they are most commonly oxidized to their stoichiometric state such as ZrTiO₄. Non-limiting examples of such mixed oxides include zirconium titanium oxide, niobium titanium oxide, combinations thereof, and the like. Additionally, dielectric materials having a "low" index of refraction can be used, such as those with a refractive index of about 1.65 or less. Nonlimiting examples of suitable low refractive index dielectric materials include silicon dioxide (SiO₂), aluminum oxide (Al₂O₃), metal fluorides such as magnesium fluoride (MgF₂), aluminum fluoride (AlF₃), cerium fluoride (CeF₃), lanthanum fluoride (LaF₃), sodium aluminum fluorides (e.g., Na₃AlF₆ or Na₅Al₃F₁₄), neodymium fluoride (NdF₃), samarium fluoride (SmF₃), barium fluoride (BaF₂), calcium fluoride (CaF₂), lithium fluoride (LiF), combinations thereof, or any other low index material having an index of refraction of about 1.65 or less. It should be appreciated that several of the above-listed dielectric materials are typically present in non-stoichiometric forms, often depending upon the specific method used to deposit the dielectric material as a coating layer, and that the above-listed compound names indicate the approximate stoichiometry. For example, silicon monoxide and silicon dioxide have nominal 1:1 and 1:2 silicon to oxygen ratios, respectively, but the actual silicon to oxygen ratio of a particular dielectric coating layer varies somewhat from these nominal values. Such non-stoichiometric dielectric materials are also within the scope of the present invention. Care should be taken to ensure the thickness of the protective layer 200 is not too high so as to impede the transparency of this layer.

The lacquer layers may be composed of clear organic material such as nitrocellulose or acrylic resins, optionally including a dye for providing a colored hue to the glitter.

According to another embodiment of the instant invention, a glitter particle 20 shown in Fig. 2 includes a substrate 100 and a layered structure 21 on the substrate 100. The layered structure 21 includes a reflector layer 110 and optional lacquer layers 120, such as described above with reference to Fig. 1. Additionally, the layered structure 21 includes an adhesion promoting layer 300 adjacent directly to the organic substrate 100; the adhesion promoting layer 300 is an example of the aforementioned robustness-improving layers.

By way of example, the adhesion promoting layer 300 is composed substantially of Chromium or Titanium and has a thickness of no greater than 6 nm, to provide transparency of at least 85%.

Preferably, the thickness of the adhesion promoting layer 300 when it is composed of Chromium or Titanium is in the range of 2-4 nm, in order to increase its transparency. Only few monolayers are necessary in the adhesion promoting layer 300 to increase the bond between the substrate 100 and the reflector layer 110.

Alternatively, the adhesion promoting layer 300 is composed substantially of SiOx, where x=1 and 2, or MgF₂, or parylene, having a thickness, for example, in the range of 30-200 nm.

According to one embodiment of the instant invention, a glitter particle 30 shown in Fig. 3 includes a substrate 100 and a layered structure 31 on the substrate 100. The layered structure 31 includes a reflective layer 110 and two robustness-improving layers: an inorganic protective layer 200 and an adhesion promoting layer 300 such as described above with reference to Figs. 1 and 2. The combination of layers 200 and 300 results in increase of glitter rigidity and almost absent the salt-and-pepper effect. Additionally, the particle 30 has optional lacquer layers 120, such as described above with reference to Fig. 1.

In the aforedescribed particles 10, 20, and 30, the reflective layer 110 may be replaced with a reflective core 111, as shown in Fig. 4. A glitter particle 40 has a substrate 100 supporting a layered structure 41, which includes the reflective core 111, an inorganic protective layer 200, and an optional lacquer layer 120. The reflective core 111 includes a magnetic layer 400 and two reflector layers 110 disposed so that the magnetic layer 400 is between the reflector layers 110 and is not visible. With the exception of the magnetic layer 400, other layers of the particle 40 are the same as corresponding layers of the particle 10. The optical properties of the particle 40 are the same as of the particle 10; they are defined by a reflectivity of the surfaces 112 of the reflective core 111, which should be of no less than 50%. The reflector layers 110 are preferably layers of aluminum; the magnetic layer 400 may include such magnetic materials as Fe, Ni, Co, Co alloy, and the like. Alternatively, the internal layer of the reflective core may be not magnetic.

According to one embodiment of the instant invention, the metallic-colored glitter particles include an adhesion promoting layer deposited directly on an organic substrate and/or include an inorganic protective layer disposed so that a reflector layer is located between the organic substrate and the inorganic protective layer. Both, the adhesion promoting layer and the inorganic protective layer, are preferably transparent, or thin enough to have a transparency of greater than 85%. Both layers are colorless or may add a hue to the metallic color of the particles.

Optionally, the particles shown in Figs. 1-4 have additional layers for improving adhesion within the particle, wherein the design takes onto account a difference of tensile properties of the layers within the particle, for example, alternating tensile and contractive layers. The additional layers are colorless or provide a light colored hue, while having a transparency of greater than 85%. Preferably, the additional layers are transparent.

Optionally, the glitter particles 10, 20, 30, and 40, include lacquer layers at the surface thereof, the same way as the conventional neutral glitter. The lacquer layers may be clear layers of nitrocellulose, acrylic resins, etc., optionally including a dye.

Lacquering of both sides of metallized foil prior to cutting it into glitter is a part of the conventional process. The lacquers are polymeric coatings that are often dyed to give the color to the glitters. lacquer is a polymeric layer optionally with organic dye, The dyed lacquers are applied to both sides and in the aluminum side to produce the desired coloration. If a lacquer layer is damaged, the colored glitter pigment loses its color properties and becomes more pastel. The aluminum layer side can also be directly attacked and lose its brightness so that the glitter becomes darker and less reflecting.

In one embodiment, an organic substrate has two layered structures coated on both sides of the substrate. The two layered structures may be same or different, and each of them may be one of the layered structures 11, 21, 31, or 41, described above. Each of the layered structures consists of: a reflective core supported by the organic substrate, such as the core 111 or the reflector layer 110; one or more robustness-improving layers supported by the organic substrate, for providing rigidity to the particle; and, optionally, a lacquer layer at a surface of the particle such as the lacquer layers 120. The one or more robustness-improving layers include a transparent inorganic protective layer, similar to the protective layer 200, or an adhesion promoting layer, such as the layer 300, or both. Similar to particles 10, 20, 30, and 40, the particles with two layered structures on both sides of the substrate may have additional layers for improving adhesion within the particle, for example, alternating tensile and contractive layers. Advantageously, the substrate and all the layers between two reflector layers are not visible and therefore are not necessarily transparent. By way of example, glitter particles with two layered structures have the following design: an organic substrate composed of PET, two aluminum reflector layers deposited on each side of the substrate, and two SiO₂ protective layers deposited on the reflector layers.

The glitter is manufactured by deposition of thin film layers onto an organic substrate web to form a multilayered foil.

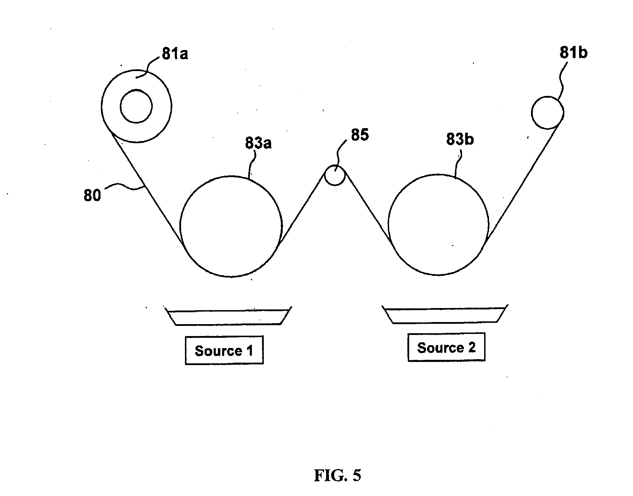

The deposition methods are known in the art. By way of example, a roll-to-roll a double deposition system is employed as shown in FIG. 5. An un-wind reel 81 a feeds organic substrate material 80 which passes under drums 83a and 83b to a wind-up reel 81b via a tension wheel 85, wherein layers of different materials are deposited onto the substrate web 80. Source 1 may be a multi-pocket evaporation crucible that holds more than one material and the type of evaporation at Source 1 and Source 2 may be either resistive, electron beam or DC magnetron sputtering or by chemical vapor deposition.

After forming the multilayered coating as described above with reference to Figs. 1-4, the substrate sheet with the coating thereon is cut into glitter particles without the need for solvent stripping with its associated environmental and required personal protection impacts normally associated with the conventional harvesting of particles from a coated release type polyester film. Here one simply removes the roll from the coating chamber and cuts the web into glitter particles by using well known confetti type cutting machines. Various regular or irregular shapes can be cut including, squares, rectangles, triangles and hexagons. Preferably, the particles cut such that their shape and size are substantially uniform for achieving a better glittering effect.

Advantageously, this invention does not require using a release coated substrate and does not remove the coating from the web to make pigment (i.e. flakes). Furthermore, the glitter particles in accordance with this invention preferably all have the same dimensions in contrast to a Gaussian distribution of pigment particles in the prior art that are generally centered about 17 microns. In a preferred embodiment the glitter particles are relatively large in comparison that is to say, they are about 50-500 microns across or more.

Applications for this glitter include paints where such glitter effects are desired i.e. on boats, skis, snow boards, personal watercraft. Such glitter particles can also be used in plastics such as hair combs, toys and appliances.

Thus, this invention provides highly reflective glitter having both an excellent glittering properties and improved robustness, which allows to eliminate or at least significantly decrease the salt-and-pepper effect in paint coatings.

## Claims

1. Opaque glitter comprising uniformly shaped and sized particles, each of the particles consisting of:
a transparent organic substrate;
a reflective core supported by the transparent organic substrate;
one or more robustness-improving layers supported by the transparent organic substrate, for providing rigidity to the particle; and,
optionally, lacquer layers at a surface of the particle.

2. The glitter defined in claim 1, wherein the robustness-improving layers include an inorganic transparent protective layer positioned so that the reflective core is disposed between the transparent organic substrate and the inorganic transparent protective layer.

3. The glitter defined in claim 1, wherein the robustness-improving layers include an adhesion promoting layer directly adjacent to the transparent organic substrate.

4. The glitter defined in claim 3, wherein the adhesion promoting layer comprises Chromium or Titanium and has a thickness of no greater than 6 nm.

5. The glitter defined in claim 3, wherein the adhesion promoting layer comprises parylene or SiOx, wherein x=1 or 2.

6. The glitter defined in claim 2, wherein the inorganic transparent protective layer has a thickness of at least 20 nm.

7. The glitter defined in claim 1, wherein the reflective core consists of a reflector layer.

8. The glitter defined in claim 1, wherein the reflective core comprises two reflector layers at two core surfaces opposite one another, and a magnetic layer therebetween.

9. The glitter defined in claim 1, wherein the particles consist of:
the transparent organic substrate composed of PET;
the reflector core consisting of an aluminum layer adjacent directly to the transparent organic substrate;
the robustness-improving layer, which is an inorganic transparent protective layer having a thickness of at least 20 nm, adjacent directly to the reflector core; and,
optionally, the lacquer layers at the surface of the particle.

10. The glitter defined in claim 1, wherein the particles consist of:
the transparent organic substrate composed of PET;
the reflector core consisting of an aluminum layer;
the robustness-improving layer, which is the adhesion promoting layer, adjacent directly to the transparent organic substrate and the reflector core, for promoting adhesion therebetween; and,
optionally, the lacquer layers at the surface of the particle.

11. The glitter defined in claim 10, wherein the robustness-improving layer comprises Chromium or Titanium and has a thickness of no greater than 6 nm or comprises parylene or SiOx, wherein x=1 or 2.

12. The glitter defined in claim 1, wherein the particles consist of:
the transparent organic substrate composed of PET;
the reflector core consisting of an aluminum layer;
a first of the robustness-improving layers, which is an adhesion promoting layer, adjacent directly to the transparent organic substrate and the reflector core, for promoting adhesion therebetween;
a second of the robustness-improving layers, which is an inorganic transparent protective layer having a thickness of at least 20 nm, disposed so that the reflector core is located between the first and second robustness-improving layers; and,
optionally, the lacquer layers at the surface of the particle.
